# EUROPÄISCHE PATENTSCHRIFT

(11) **EP 3 439 373 B1**
(45) Veröffentlichungstag und Bekanntmachung des Hinweises auf die Patenterteilung: **12.02.2020**
(21) Anmeldenummer: 18183203.1
(22) Anmeldetag: 12.07.2018
(51) Int. Cl.: H04W 52/02, H04W 4/44, H04W 4/50, H04W 76/20, G07C 5/00, G07C 5/08, H04W 4/70, H04W 88/04, H04W 84/00

(54) **VERFAHREN ZUM BETREIBEN EINER MOBILFUNKSTATION, MOBILFUNKSTATION SOWIE COMPUTERPROGRAMM**
MOBILE STATION AND COMPUTER PROGRAM AND METHOD FOR OPERATING A MOBILE STATION
PROCÉDÉ DE FONCTIONNEMENT D'UNE STATION RADIO MOBILE, STATION RADIO MOBILE ET PROGRAMME INFORMATIQUE

(30) Priorität: 31.07.2017 DE 102017213166
(43) Veröffentlichungstag der Anmeldung: 06.02.2019
(73) Patentinhaber: VOLKSWAGEN AKTIENGESELLSCHAFT, 38440 Wolfsburg (DE)
(72) Erfinder: Hehn, Dr. Thorsten, 85055 Etting (DE); Zielinski, Ernst, 44803 Bochum (DE); Schmitz, Steffen, 46485 Wesel (DE); Kwoczek, Andreas, 38165 Lehre (DE); Buburuzan, Dr. Teodor, 38118 Braunschweig (DE); Alieiev, Roman, 39576 Stendal (DE)

(56) Entgegenhaltungen:
- US-A1- 2015 372 801
- US-A1- 2016 316 358
- US-A1- 2017 142 204
- US-A1- 2017 196 016

## Beschreibung

Die Erfindung betrifft ein Verfahren zum Betreiben einer Mobilfunkstation, die Teilnehmer eines Mobilfunk-Kommunikationssystems ist. Der Vorschlag betrifft weiterhin eine für die Durchführung des Verfahrens entsprechend ausgelegte Mobilfunkstation und ein für die Durchführung des Verfahrens entsprechend ausgelegtes Computerprogramm.

Grundlage der Erfindung ist zunächst einmal das Szenario von mit Funkkommunikationsmodulen ausgestatteten Fahrzeugen, die ebenfalls als Teilnehmer im öffentlichen Mobilfunknetz kommunizieren. Die heutigen öffentlichen Mobilfunknetze sind hauptsächlich in einer der verschiedenen Varianten der 3GPP Standard-Familie des LTE Systems, entsprechend Long Term Evolution ausgelegt.

Zukünftig werden immer mehr Kraftfahrzeuge mit Funkkommunikationsmodulen ausgestattet sein, die in der Lage sind über WLAN oder über das Mobilfunknetz zu kommunizieren. Für das Szenario von mit Funkkommunikationsmodulen ausgestatteten Fahrzeugen, die im öffentlichen Straßenverkehr direkt miteinander kommunizieren, sei es für ein kooperatives oder autonomes Fahren, ist die Ausstattung mit Funkkommunikationsmodul ebenfalls erforderlich.

Ein Funkkommunikationsmodul wird im Bereich der Kraftfahrzeugtechnik oft auch als On-Board Unit OBU, Online Connectivity Unit OCU oder als Funkmodem bezeichnet. Diese Begriffe werden hier als Synonyme angesehen.

Aufgabe des Funkkommunikationsmoduls im Bereich des Mobilfunks ist es eine sichere und stabile Verbindung zwischen dem Fahrzeug und dem Backend des Mobilfunknetzes zu garantieren. Derzeit sind folgende Mobilfunktechnologien eingesetzt, GSM, 3GPP-basiertes UMTS, HSPA, und LTE.

Es handelt sich also um ein separates Funkmodem, mit einer oder mehreren Mobilfunkantennen, welches den Mobilfunkempfang ermöglicht und auch eine stabilere und schnellere Internetverbindung ermöglicht. Dazu kann gehören, dass das Fahrzeug mit einer Schnittstelle zum Lesen einer SIM-Karte ausgestattet wird. Diese kann im Handschuhfach des Fahrzeugs positioniert werden.

Wie bei Smartphones, variiert auch bei den im Fahrzeug eingebauten Funkkommunikationsmodulen je nach Standort die Qualität der Funkverbindung/Internetverbindung und somit auch die Übertragungsgeschwindigkeit. Die Mobilfunkabdeckung unterscheidet sich je nach Region und Mobilfunkanbieter teilweise erheblich. Darüber hinaus ist in Tiefgaragen oder Tunneln mitunter gar keine oder nur eine minderwertige Verbindung möglich.

Im Mobilfunk bedeutet Verlässlichkeit der Datenübertragung Vollständigkeit (alle gesendeten Nutzdaten kommen beim Empfänger an) und Korrektheit (die gesendeten Nutzdaten und die aus den empfangenen Daten zurückgewonnenen Nutzdaten stimmen überein). Dazu werden in den Mobilfunktechnologien verschiedene Methoden eingesetzt, z.B. Frequenzdiversität, räumliche Diversität, sinnvolle Wahl der Modulationsart und Modulationsparameter und des zu verwendenden Kanalcodes wie auch der Coderate, etc.!

Das LTE System unterstützt sogar die Fahrzeugdirekt-Kommunikation. Dabei kommunizieren die Verkehrsteilnehmer direkt untereinander, ohne, dass die Kommunikation über eine Mobilfunk-Basisstation geleitet wird. Bei LTE ist diese Variante unter dem Schlagwort LTE-V bekannt, bei der nicht-fahrzeugbezogenen Kommunikation heißt diese Variante Device-to-Device-Kommunikation (D2D).

Typische Kommunikations-Szenarien für die Fahrzeugdirekt-Kommunikation sind Sicherheitsszenarien, Verkehrseffizienzszenarien und Infotainment. Für den Bereich Sicherheit werden folgende Szenarien genannt: "Cooperative Forward Collision Warning", "Pre-Crash Sensing/Warning", "Hazardous Location Warning". In diesen Bereichen tauschen die Fahrzeuge untereinander Informationen wie Position, Richtung und Geschwindigkeit aus, auch Parameter wie Größe und Gewicht. Weitere Informationen, die übertragen werden, betreffen Absichtsinformationen, wie "Fahrzeug beabsichtigt zu überholen", "Fahrzeug biegt links/rechts" ab, usw. die für das kooperative Fahren interessant sind. Dabei werden oft Sensordaten übermittelt. Falls eine Gefahrensituation vorliegt und der Fahrer nicht reagiert, könnte das Auto automatisch abbremsen, so dass ein Unfall verhindert wird oder zumindest die Folgen bei dem unvermeidlichen Unfall möglichst geringgehalten werden. In dem Bereich des "Platooning", hierbei handelt es sich um den Bereich des kooperativen Fahrens in einer Fahrzeugkolonne, ist es geplant z.B. Information über das geplante Bremsverhalten von vorne nach hinten weiterzumelden um Auffahrunfälle zu vermeiden.

Dabei entspricht die Hard- und Software-Ausstattung von im Fahrzeug eingesetzten Funkkommunikationsmodulen weitgehend dem eines modernen Smartphones, wenn man von dem Display absieht. Deshalb werden z.Z. derartige hochwertige Funkkommunikationsmodule hauptsächlich im Premium-Segment der Fahrzeugkategorien eingesetzt.

Aufgrund der weltweiten Verbreitung von 3GPP basierten Mobilfunknetzwerken, entsprechen auch die in Fahrzeugen eingebauten Kommunikationsgeräte zur Mobilfunkkommunikation diesen Spezifikationen.

Die Funktionalität eines Mobilfunkgerätes wird unter anderem durch die sogenannte Mobilfunk-Gerätekategorie bestimmt, die bei jeder Anmeldung in dem Mobilfunknetz mitgeteilt wird.

Von der 3GPP wurden viele verschiedene Mobilfunk-Gerätekategorien spezifiziert. Eine gute Übersicht über die verschiedenen Mobilfunk-Gerätekategorien findet sich in der Internet-Veröffentlichung "LTE Release-Versionen und Gerätekategorien" unter dem folgenden Link: http://www.lte-anbieter.info/technik/kategorien-und-3gpp-release.php

Obwohl bereits über 12 verschiedene Mobilfunk-Gerätekategorien spezifiziert wurden, ist es nach wie vor Sache des Herstellers sich eine gewünschte Mobilfunk-Gerätekategorie auszuwählen und dann ein Mobilfunkgerät entsprechend dieser Kategorie zu entwickeln und herzustellen. Die Mobilfunk-Gerätekategorie wird also schon bei der Entwicklung festgelegt und bleibt auch während der Laufzeit des Mobilfunkgerätes fix. Die Anmeldung im Mobilfunknetz geschieht daher immer mit derselben Mobilfunk-Gerätekategorie.

Aus dem Dokument US 2016/316358 A1 ist ein UE-Gerät bekannt, welches die Fähigkeit hat, die Gerätekategorie zu wechseln. Dabei wird der Wechsel der Gerätekategorie entweder von einem Service-Provider veranlasst oder das Gerät führt den Wechsel automatisch aus oder eine Bedienperson veranlasst den Wechsel manuell.

Das Dokument US 2017/0196016 A1 betrifft ebenfalls Mobilfunkstationen (UE-Devices), die einen Wechsel der Gerätekategorie vollziehen können. Darin wird beschrieben, dass ein Wechsel der Gerätekategorie stattfinden kann, wenn die QoS Kriterien nicht mehr eingehalten werden können.

Das Dokument US 2015/0372801 A1 beschreibt ein UE-Gerät, das auch als Funkrelais arbeiten kann.

Das Dokument US 2012/275369 A1 beschreibt ebenfalls UE-Geräte. Diese sind besonders eingerichtet, um das simultane Unterstützen verschiedener Übertragungsmodi, nämlich Unicast und Multicast/Broadcast, zu ermöglichen.

Aus der US 2017/142204 A1 ist ein Konzept für eine adaptive mobile Kommunikation bekannt, bei dem dynamisch wechselnde Kategorien von Benutzergeräten ("UE") unterstützt werden. Gemäß einem Aspekt kann eine Fahrzeugkommunikationsvorrichtung bestimmen, ob sie in einem Leerlaufmodus oder einem verbundenen Modus arbeitet. Basierend darauf, ob die verbundene Fahrzeugkommunikationsvorrichtung im Leerlaufmodus oder im verbundenen Modus arbeitet, kann die Fahrzeugkommunikationsvorrichtung eine aktive UE-Kategorie aus einem Satz verfügbarer UE-Kategorien bestimmen. Die verbundene Fahrzeugkommunikationsvorrichtung kann die aktive UE-Kategorie an eine Basisstation senden.

In zukünftigen Automobilgenerationen werden Kommunikationsmodule eingesetzt, die mehr Funktionen bieten als bisherige Generationen von Kommunikationsgeräten. Möglicherweise erfordern verschiedenen Fahrzeugzustände eine unterschiedliche Funktionalität der Geräte. Verschiedene Fahrzeugzustände sind zum Beispiel ein geparktes oder ein fahrendes Fahrzeug. Ein geparktes Fahrzeug stellt nur ein begrenztes Energiebudget für Steuergeräte zur Verfügung und braucht zugleich in diesem Zustand keine hochratige Datenverbindung. Es gelten dann eher die Anforderungen der Maschine zu Maschine - Kommunikation. Stellt das Fahrzeug den Fahrzeuginsassen Kommunikationsdienste zur Verfügung, wie dies in der Regel bei einem gestarteten Fahrzeug der Fall ist, dann ist eine hohe Datenrate erforderlich. Es wurde im Rahmen der Erfindung erkannt, dass die derzeitige Herangehensweise: Festlegung der Mobilfunk-Gerätekategorie bei der Entwicklung und Verwendung dieser fixen Mobilfunk-Gerätekategorie über die Laufzeit des Gerätes zumindest aus Sicht eines Fahrzeugherstellers ein Problem darstellt. Es ist nämlich zurzeit kein Mechanismus bekannt, der es den Geräten ermöglicht, einen Wechsel der Mobilfunk-Gerätekategorie basierend auf Betriebszuständen vorzunehmen. Es ist daher Aufgabe der Erfindung ein Verfahren anzugeben, mit dem es möglich ist einen Wechsel der Mobilfunk-Gerätekategorie je nach Betriebszustand durchzuführen.

Diese Aufgabe wird durch ein Verfahren zum Betreiben einer Mobilfunkstation gemäß Anspruch 1, eine Mobilfunkstation gemäß Anspruch 8 und ein Computerprogramm gemäß Anspruch 10 gelöst.

Die abhängigen Ansprüche beinhalten vorteilhafte Weiterbildungen und Verbesserungen der Erfindung entsprechend der nachfolgenden Beschreibung dieser Maßnahmen.

Befindet sich das Fahrzeug in einem Zustand wo das Fahrzeug abgestellt ist und die Maschine aus ist, dann wird es hier vorgesehen, dass das Kommunikationsmodul mit einer Mobilfunk-Gerätekategorie für eine Maschine zu Maschine - Kommunikation am Mobilfunknetzwerk angemeldet ist. Dadurch erfolgt die Kommunikation mit dem Mobilfunknetzwerk mit einer niedrigen Datenrate, wodurch die Energieaufnahme des Kommunikationsgerätes geringer ist. Durch den geringen Energieverbrauch kann das Gerät länger mit dem Netzwerk verbunden sein, bevor die Fahrzeugbatterie erschöpft ist. Ändert sich der Fahrzeugzustand in Zustand 2 (der Motor des Fahrzeugs wird z.B. gestartet), dann meldet sich das Kommunikationsgerät am Netzwerk mit der Gerätekategorie "Maschine zu Maschine" ab und meldet sich im Anschluss mit einer Gerätekategorie für Geräte mit höheren Datenraten wieder an. Dadurch können zum Beispiel Fahrzeuginsassen mit Multimedia-Inhalten oder das Fahrzeug kann mit Kartendaten für eine bevorstehende Fahrt versorgt werden.

Der Vorschlag betrifft eine Verfahren zum Betreiben einer Mobilfunkstation, wobei in dem Mobilfunksystem eine Anzahl von Mobilfunk-Gerätekategorien festgelegt sind, und die Kommunikation in dem Mobilfunksystem eine Einbuchung/Anmeldung im Mobilfunknetz unter Angabe der Mobilfunk-Gerätekategorie der Mobilfunkstation voraussetzt. Dabei werden einer Anzahl von verschiedenen Betriebszuständen der Mobilfunkstation verschiedene Mobilfunk-Gerätekategorien zugewiesen und, es wird in der Mobilfunkstation überwacht, ob der Betriebszustand wechselt. Sodann wird im Betrieb überprüft, ob die angemeldete Gerätekategorie noch zum Wechsel des Betriebszustandes passt, wobei, wenn festgestellt wird, dass für den Wechsel des Betriebszustandes eine andere Mobilfunk-Gerätekategorie vorgesehen ist, dass die Mobilfunkstation von dem Mobilfunknetz abgemeldet wird. Danach erfolgt dann eine Neuanmeldung der Mobilfunkstation unter Angabe der nun passenden Mobilfunk-Gerätekategorie.

Das Verfahren hat den Vorteil, dass die Dienstgüte sehr flexibel an verschiedene Betriebszustände angepasst werden kann. So werden nicht ständig wichtige Mobilfunkressourcen belegt, wenn der Betriebszustand es gar nicht erfordert. Die Effizienz der Mobilfunkversorgung kann dadurch gesteigert werden. Ein anderer Vorteil besteht darin, dass die vorhandenen Mechanismen wie das An- und Abmelden von Kommunikationsgeräten bei 3GPP basierten Mobilfunknetzwerken einfach weitergenutzt werden können ohne neue Prozeduren entwickeln und spezifizieren zu müssen. Die Neuerung muss hierbei hauptsächlich auf der Seite des Kommunikationsgerätes umgesetzt werden.

Gegenüber einer Alternativlösung, bei der eine neue Mobilfunk-Gerätekategorie spezifiziert werden müsste, für die eine Dienstumschaltung nach Betriebszuständen vorgesehen wäre, besteht ein Vorteil darin, dass die 3GPP Mobilfunkspezifikationen nicht um eine weitere Gerätekategorie ergänzt werden müssen.

Für die Implementierung ist es von Vorteil, wenn der jeweilige Betriebszustand in einer Registerstelle in einem Registrierbereich eines Speichers registriert wird und der Eintrag in der Registerstelle bei Erkennen des Betriebszustandswechsels aktualisiert wird.

Hier ist es ebenfalls von Vorteil, wenn die Prüfung ob die angemeldete Mobilfunk-Gerätekategorie noch zum Wechsel des Betriebszustandes passt, bei Erkennen des Betriebszustandswechsels durchgeführt wird. Dies entspräche einer Realisierung mittels Interrupt Service Routine.

Gemäß einer anderen Variante wird die Prüfung ob die angemeldete Gerätekategorie noch zum Wechsel des Betriebszustandes passt, im Betrieb laufend durchgeführt oder sie wird sporadisch oder mit einem eingestellten Zeitintervall wiederholt.

Für die programmtechnische Realisierung ist es vorteilhaft, wenn die aktuelle Mobilfunk-Gerätekategorie in einer weiteren Registerstelle des Registerbereichs registriert wird und der Eintrag in der weiteren Registerstelle bei dem Vorgang von Ab- und Neuanmeldung der Mobilfunkstation bei der Mobilfunk-Basisstation aktualisiert wird. Das Verfahren ist damit deterministisch und es kommt nicht zu Verwechselungen, wenn der Betriebszustand nach kurzer Zeit wieder wechselt.

Für eine konkrete Realisierung bei einem Mobilfunkgerät wie Smart Phone oder Tablet ist es vorteilhaft wenn wenigstens die Betriebszustände "Power On" und "Standby" für die Registrierung unterschieden werden, wobei als Mobilfunksystem eine Variante der Mobilfunk-Standardfamilie LTE entsprechend Long Term Evolution verwendet wird und für den Betriebszustand "Power On" eine Mobilfunk-Gerätekategorie ab "Category 6" entsprechend "mobile broad band (MBB)" vorgesehen wird und für den Betriebszustand "Standby" eine Mobilfunk-Gerätekategorie kleiner als "Category 6" oder einer Gerätekategorie für MTC (Machine Type Communication) und oder NB-loT (Narrowband-Internet of Things) vorgesehen wird.

Die Erfindung kann besonders vorteilhaft bei einem Fahrzeug eingesetzt werden. Dabei ist es vorgesehen, dass sich der Betriebszustand sich auf den Betriebszustand des Fahrzeuges bezieht.

Hier ist es vorteilhaft, wenn wenigstens die Betriebszustände "Motor An" und "Motor Aus" für die Registrierung unterschieden werden.

Für die Nutzung der Erfindung im Fahrzeug besteht ein besonderer Vorteil darin, dass durch den Wechsel in eine andere Mobilfunk-Gerätekategorie insbesondere bei den Standzeiten, wenn das Fahrzeug abgestellt ist ("Motor Aus"), die Batterie des Fahrzeuges geschont werden kann. Durch die fahrzeugzustandsabhängige Nutzung von Gerätekategorien, können vorhandene Funktionen im Fahrzeug verbessert, als auch neue Funktionen eingeführt werden. Funktionsverbesserungen können zum Beispiel eine längere Onlinezeit des Kommunikationsgeräts sein, da durch die Verwendung einer Maschine zu Maschine Gerätekategorie weniger Energie verbraucht wird.

Als weiterer Betriebszustand, der bei Fahrzeugen für die Registrierung vorgesehen werden kann, kann wenigstens der Betriebszustand, in dem das abgestellte Fahrzeug als Funkrelais-Station betrieben wird unterschieden werden.

Für eine konkrete Realisierung wird wiederum als Mobilfunksystem eine Variante der Mobilfunk-Standardfamilie LTE entsprechend Long Term Evolution verwendet und für den Betriebszustand "Motor Aus" wird die Mobilfunk-Gerätekategorie "Category M1" entsprechend "machine type communication MTC" vorgesehen und für die Betriebszustände "Motor An" und "Relais" eine Mobilfunk-Gerätekategorie ab "Category 6" entsprechend "mobile broad band MBB" vorgesehen.

Für die programmtechnische Realisierung ist es wiederum von Vorteil, wenn eine Zuordnungs-Tabelle in einem Speicher vorgesehen wird, aus der die Zuordnung von einem oder mehreren Betriebszuständen zu einer Mobilfunk-Gerätekategorie entnommen wird. Diese kann in Form einer Lookup-Tabelle realisiert werden.

Für eine Mobilfunkstation gemäß dem Vorschlag ist es von Vorteil, dass die Mobilfunkstation einen Speicher aufweist, oder der Mobilfunkstation ein Speicher zugewiesen ist, in dem die Zuordnung von einem oder mehreren Betriebszuständen zu einer Mobilfunk-Gerätekategorie in einer Tabelle abgespeichert ist.

Weiterhin bestehen vorteilhafte Maßnahmen darin, dass der Speicher eine Registerstelle in einem Registrierbereich des Speichers aufweist in dem der jeweilige Betriebszustand registriert ist, und der Speicher eine weitere Registerstelle in dem Registrierbereich aufweist, in der die aktuelle Mobilfunk-Gerätekategorie registriert ist.

Eine solche Mobilfunkstation kann in vorteilhafterweise als Kommunikationsmodul in einem Fahrzeug integriert werden.

Für ein erfindungsgemäßes Computerprogramm, gelten die entsprechenden Vorteile wie bei dem erfindungsgemäßen Verfahren.

Ein Ausführungsbeispiel der Erfindung ist in den Zeichnungen dargestellt und wird nachfolgend anhand der Figuren näher erläutert.

Es zeigen:
- Fig. 1: ein Tiefgaragenszenario bei dem zwei Fahrzeuge in der Tiefgarage geparkt sind und ein Fahrzeug sich auf der Zufahrt zur Tiefgarage bewegt;
- Fig. 2: ein Cockpit eines Fahrzeuges;
- Fig. 3: ein Blockdiagramm für die Infotainment-Elektronik eines Fahrzeuges;
- Fig. 4: die Registerstellen und eine Tabelle in einem der Mobilfunkstation zugewiesenen Speicher; und
- Fig. 5: ein Flussdiagramm eines Programms mit dem die Mobilfunk-Gerätekategorie entsprechend des Zustandes eines Fahrzeuges eingestellt wird.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

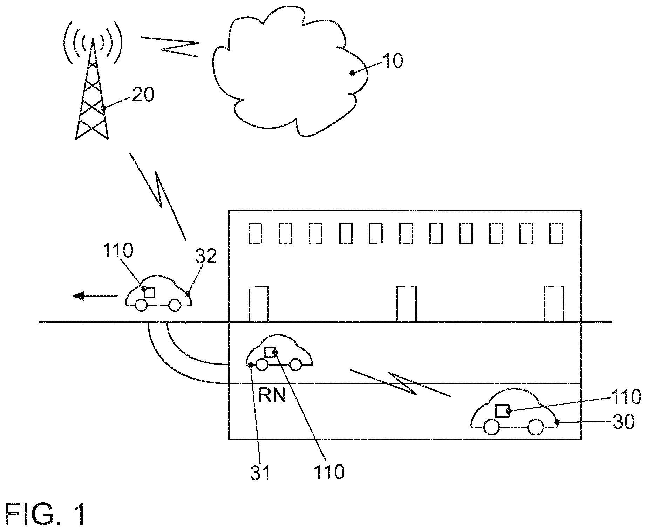

Fig. 1 zeigt ein typisches Tiefgaragenszenario bei der Mobilkommunikation. Es sind drei Fahrzeuge gezeigt. Das Fahrzeug 30 ist im hinteren Teil der Tiefgarage abgestellt. Das Fahrzeug 31 ist im vorderen Teil der Tiefgarage abgestellt. Dann ist noch ein Fahrzeug 32 dargestellt, dass sich auf der Zufahrt zur Tiefgarage bewegt. Die Fahrzeuge sind jeweils mit einem Kommunikationsmodul 110 ausgestattet, das auch als On-Board Unit oder Online Connectivity Unit bezeichnet wird. Das Kommunikationsmodul 110 dient als Sende- und Empfangseinheit für die Mobilkommunikation. Alle Nachrichten von den Fahrzeugen (Uplink) und zu den Fahrzeugen (Downlink) werden entweder über eine Basisstation 20 geleitet, die eine Mobilfunkzelle bedient oder im Fall von Fahrzeugdirektkommunikation (Sidelink) unmittelbar zwischen den Fahrzeugen 30, 31, 32 ausgetauscht. Befinden sich die Fahrzeuge innerhalb dieser Mobilfunkzelle, sind sie bei der Basisstation 20 angemeldet bzw. eingebucht. Verlassen sie die Mobilfunkzelle, werden sie an die benachbarte Zelle übergeben (Handover) und dementsprechend an der Basisstation 20 abgemeldet bzw. ausgebucht. Die Basisstation 20 stellt auch einen Zugang zum Internet 10 zur Verfügung, so dass die Fahrzeuge 30, 31, 32 bzw. alle anderen Mobilfunk-Teilnehmer in der Mobilfunkzelle mit Internetdaten versorgt sind.

Diese Techniken sind standardisiert und es wird diesbezüglich auf die entsprechenden Spezifikationen von Mobilfunkstandards hingewiesen. Als ein modernes Beispiel eines Mobilfunkstandards wird auf die 3GPP Initiative und den LTE-Standard (Long Term Evolution) Bezug genommen. Viele der zugehörigen ETSI Spezifikationen liegen z.Z. in der Version 13 vor. Als Beispiel wird genannt: ETSI TS 136 213 V13.0.0 (2016-05); Evolved Universal Terrestrial Radio Access (E-UTRA); Physical layer procedures (3GPP TS 36.213 version 13.0.0 Release 13). Es wird hier auf die für Europa gültige ETSI Spezifikation verwiesen. Entsprechende Spezifikationen werden für andere Regionen der Erde von anderen Standardisierungsorganisationen herausgegeben.

Das Problematische an dem betrachteten Tiefgaragenszenario ist nun, dass die Netzabdeckung in einer Tiefgarage oft nicht gegeben ist. Die Funkwellen durchdringen bekanntlich Betonwände nur schlecht, so dass ein Mobilfunkteilnehmer, der sich im hinteren Teil oder unteren Teil einer Tiefgarage aufhält, kein Mobilfunksignal empfangen kann. Das Fahrzeug 30, das im hinteren Teil der Tiefgarage geparkt ist, ist davon betroffen. Dieses Fahrzeug hat keine oder nur eine schlechte Verbindung zur Basisstation 20 wegen der schlechten Netzabdeckung im hinteren/unteren Teil der Tiefgarage. Zwar wäre es möglich das Kommunikationsmodul 110 während des Stillstands des Fahrzeuges 30 ganz abzuschalten, es kann aber für verschiedene Funktionen von Vorteil sein, wenn das Kommunikationsmodul weiter eine Verbindung zum Mobilfunknetz hält. Als Beispiel wird genannt die Funktion Autotelefon um eingehende Anrufe zu registrieren, die Navigationsfunktion um ein Kartenupdate im Hintergrund durchzuführen oder um aktuelle Verkehrsinformationen zu erhalten oder der sonstige Infotainment-Bereich um z.B. bestimmte Dienste mit Daten zu versorgen wie Nachrichtendienste, Social Media Dienste, usw.. Erweitere Fahrzeugkomfortfunktionen wie Aufschließen aus der Ferne, realisiert über das Mobilfunknetz, und Abfragen von Fahrzeugparametern wie z.B. Tank- oder Batteriefüllstand über das Mobilfunknetz sind ebenfalls denkbar.

Im vorderen Bereich der Tiefgarage, nahe der Ausfahrt oder Einfahrt oder auch in der Nähe von Licht- oder Versorgungsschächten ist die Netzabdeckung oft besser. Dort ist das Fahrzeug 31 abgestellt. Die On-Board Unit 110 dieses Fahrzeuges ist als Relaisfunkstation (Relay Node) RN konfiguriert. Damit dient dieses Fahrzeug 31 dazu die Mobilfunkversorgung im hinteren/unteren Teil der Tiefgarage sicherzustellen. Einerseits hält die Relaisfunkstation die Funkverbindung zur Basisstation 20 aufrecht. Andererseits sind die anderen Fahrzeuge im hinteren/unteren Teil der Tiefgarage bei der Relaisfunkstation RN angemeldet. Für diese leitet die Relaisfunkstation deren Nachrichten an die Basisstation 20 weiter. Umgekehrt werden in Downlink-Übertragungsrichtung die Nachrichten, die von der Basisstation 20 zu den Teilnehmern UE gesendet werden, von der Relaisfunkstation RN empfangen und an die Teilnehmer UE weitergeleitet. So können auch diejenigen Fahrzeuge mit Mobilkommunikation versorgt werden, die keine direkte Funkverbindung zu der Basisstation 20 aufbauen können.

Nähere Einzelheiten über die Auswahl und Konfiguration eines Fahrzeuges, welches als Relaisfunkstation RN konfiguriert wird, sind aus der früheren Patentanmeldung mit der Anmeldenummer DE 10 2006 212 002.6 entnehmbar.

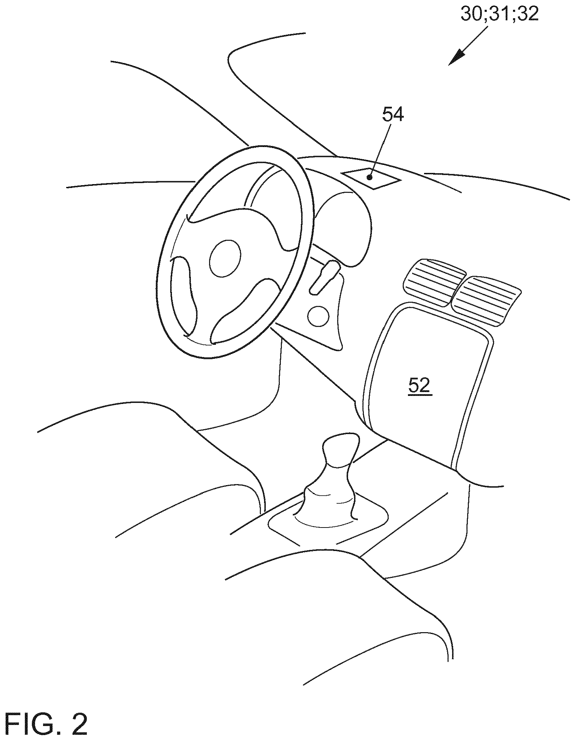

Fig. 2 zeigt das Cockpit eines der Fahrzeuge 30, 31, 32. Dargestellt ist ein Personenkraftwagen Pkw. Als Fahrzeug kämen allerdings beliebige andere Fahrzeuge ebenfalls in Betracht. Beispiele von weiteren Fahrzeugen sind: Busse, Nutzfahrzeuge, insbesondere Lastkraftwagen Lkw, Landmaschinen, Baumaschinen, Motorräder, Schienenfahrzeuge, usw. Der Einsatz der Erfindung wäre allgemein bei Landfahrzeugen, Schienenfahrzeugen, Wasserfahrzeugen und Luftfahrzeugen einsetzbar.

In dem Cockpit sind drei Anzeigeeinheiten eines Infotainment-Systems dargestellt. Es handelt sich um das Head-Up-Display 54 und einen berührungsempfindlichen Bildschirm 52 der in der Mittelkonsole angebracht ist. Bei der Fahrt liegt die Mittelkonsole nicht im Sichtfeld des Fahrers. Deshalb werden die Zusatzinformationen während der Fahrt nicht auf der Anzeigeeinheit 52 eingeblendet.

Der berührungsempfindliche Bildschirm 52 dient dabei insbesondere zur Bedienung von Funktionen des Fahrzeugs 30, 31, 32. Beispielsweise können darüber ein Radio, ein Navigationssystem, eine Wiedergabe von gespeicherten Musikstücken und/oder eine Klimaanlage, andere elektronische Einrichtungen oder andere Komfortfunktionen oder Applikationen des Fahrzeugs 30, 31, 32 gesteuert werden. Zusammengefasst wird häufig von einem "Infotainment-System" gesprochen. Ein Infotainment-System bezeichnet bei Kraftfahrzeugen, speziell Pkw, die Zusammenführung von Autoradio, Navigationssystem, Freisprecheinrichtung, Fahrerassistenzsystemen und weiterer Funktionen in einer zentralen Bedieneinheit. Der Begriff Infotainment ist ein Kofferwort zusammengesetzt aus den Worten Information und Entertainment (Unterhaltung). Zur Bedienung des Infotainment-Systems wird hauptsächlich der berührungsempfindliche Bildschirm 52 ("Touchscreen") benutzt, wobei dieser Bildschirm 52 insbesondere von einem Fahrer des Fahrzeugs 30, 31, 32 aber auch von einem Beifahrer des Fahrzeugs gut eingesehen und bedient werden kann. Unterhalb des Bildschirms 52 können zudem mechanische Bedienelemente, beispielsweise Tasten, Drehregler oder Kombinationen hiervon, wie beispielsweise Drückdrehregler, angeordnet sein.

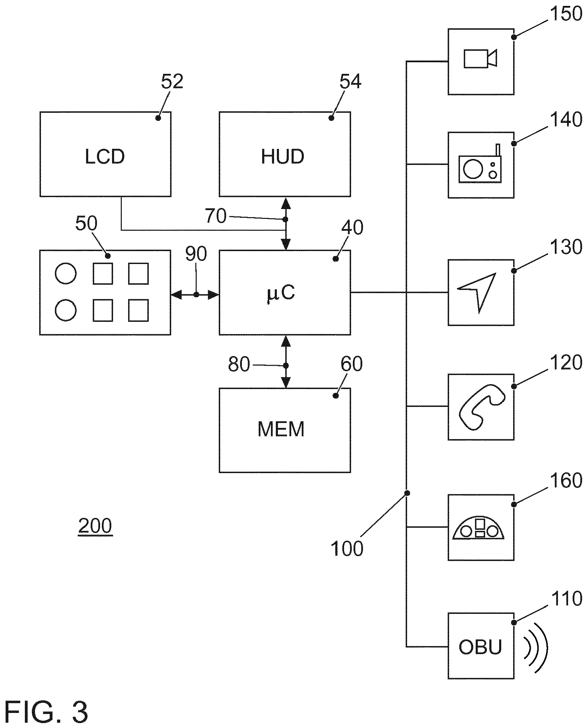

Fig. 3 zeigt schematisch ein Blockschaltbild des Infotainment-Systems 200 sowie beispielhaft einige Teilsysteme oder Applikationen des Infotainment-Systems. Die BedienungsVorrichtung umfasst den berührungsempfindlichen Bildschirm 52, eine Recheneinrichtung 40, eine Eingabeeinheit 50 und einen Speicher 60. Der Bildschirm 52 umfasst sowohl eine Anzeigefläche zum Anzeigen veränderlicher grafischer Informationen als auch eine über der Anzeigefläche angeordnete Bedienoberfläche (berührungssensitive Schicht) zum Eingeben von Befehlen durch einen Benutzer.

Der Bildschirm 52 ist über eine Datenleitung 70 mit der Recheneinrichtung 40 verbunden. Die Datenleitung kann nach dem Stand der Technik, z.B. LVDS (Low Voltage Differential Signalling), TMDS (Transition-Minimized Differential Signaling). Über die Datenleitung 70 empfängt der Bildschirm 52 Steuerdaten zum Ansteuern der Anzeigefläche des Touchscreens 52 von der Recheneinrichtung 40. Über die Datenleitung 70 werden auch Steuerdaten der eingegebenen Befehle von dem Touchscreen 52 zu der Recheneinrichtung 40 übertragen. Mit der Bezugszahl 50 ist eine Eingabeeinheit bezeichnet. Ihr zugehörig sind die schon erwähnten Bedienelemente wie Tasten, Drehregler, Schieberegler, oder Drehdrückregler, mit deren Hilfe die Bedienperson über die Menüführung Eingaben machen kann. Unter Eingabe wird allgemein das Anwählen einer ausgewählten Menüoption verstanden, wie auch das Ändern eines Parameters, das Ein- und Ausschalten einer Funktion, usw.

Die Speichereinrichtung 60 ist über eine Datenleitung 80 mit der Recheneinrichtung 40 verbunden. In dem Speicher 60 ist ein Piktogrammverzeichnis und/oder Symbolverzeichnis hinterlegt, mit den Piktogrammen und/oder Symbolen für die möglichen Einblendungen von Zusatzinformationen. Weitere Bereich im Speicher 60 werden nachfolgend noch genauer erläutert.

Die weiteren Teile des Infotainment-Systems Kamera 150, Radio 140, Navigationsgerät 130, Telefon 120 und Kombiinstrument 160 sind über den Datenbus 100 mit der Vorrichtung zur Bedienung des Infotainment-Systems verbunden. Als Datenbus 100 kommt die Highspeed-Variante des CAN-Bus nach ISO Standard 11898-2 in Betracht. Alternativ käme z.B. auch der Einsatz eines auf Ethernet-Technologie beruhenden Bussystems nach IEEE 802.03 in Frage. Auch Bussysteme, bei denen die Datenübertragung über Lichtwellenleiter geschieht, sind einsetzbar. Als Beispiele werden genannt der MOST Bus (Media Oriented System Transport) oder der D2B Bus (Domestic Digital Bus). Hier wird noch erwähnt, dass die Kamera 150 als konventionelle Videokamera ausgelegt sein kann. In diesem Fall nimmt sie 25 Vollbilder/s auf, was bei dem Interlace-Aufnahmemodus 50 Halbbilder/s entspricht. Alternativ kann eine Spezialkamera eingesetzt werden, die mehr Bilder/s aufnimmt um die Genauigkeit der Objekterkennung bei sich schneller bewegenden Objekten zu erhöhen. Es können mehrere Kameras zur Umfeldbeobachtung eingesetzt werden. Daneben könnten auch die schon erwähnten RADAR- oder LIDAR-Systeme ergänzend oder alternativ eingesetzt werden um die Umfeldbeobachtung durchzuführen oder zu erweitern. Für die drahtlose Kommunikation nach Innen und Außen ist das Fahrzeug 30, 31, 32 mit einem Kommunikationsmodul 110 ausgestattet. Es kann für die Mobilfunk-Kommunikation, z.B. nach LTE Standard, entsprechend Long Term Evolution, ausgelegt sein. Über das Kommunikationsmodul 110 kann das Fahrzeug 30, 31, 32 mobile Daten empfangen und senden. Ebenfalls kann es für WLAN-Kommunikation, entsprechend Wireless LAN, ausgelegt sein, sei es für die Kommunikation zu Geräten der Insassen im Fahrzeug oder für die Fahrzeug-zu-Fahrzeug Kommunikation, etc.

Wie beschrieben, kann es für verschiedene Funktionen des Fahrzeuges 30, sinnvoll sein, dass das Kommunikationsmodul 110 eine Verbindung zum Mobilfunknetz hält. Wenn das Fahrzeug parkt und der Motor abgestellt ist, ist es allerdings erforderlich, dass die Batterie nicht zu stark belastet wird. Somit ist es vorteilhaft, dass eine Verbindung aufgebaut wird, bei der weniger Energie verbraucht wird. Dies bedeutet dann umgekehrt aber, dass die Verbindung nur eine geringere Datenrate zur Verfügung stellt. Die 3GPP hat verschiedene Mobilfunk-Gerätekategorien spezifiziert. Dabei wurden die verschiedenen Typen von Geräten getrennt nach Downlink und Uplink-Charakteristik spezifiziert. Die nachfolgende Tabelle zeigt die verschiedenen Mobilfunk-Gerätekategorien für den Downlink-Bereich. Diese Tabelle wurde der 3GPP Spezifikation 3GPP TS 36.606 V14.0.0 (2016-09) entnommen.

**Table 4.1A-1: Downlink physical layer parameter values set by the field ue-CategoryDL**

| UE DL Category | Maximum number of DL-SCH transport block bits received within a TTI (Note 1) | Maximum number of bits of a DL-SCH transport block received within a TTI | Total number of soft channel bits | Maximum number of supported layers for spatial multiplexing in DL |
|---|---|---|---|---|
| DL Category M1 | 1000 | 1000 | 25344 | 1 |
| DL Category M2 | 4008 | 4008 | 73152 | 1 |
| DL Category 0 (Note 2) | 1000 | 1000 | 25344 | 1 |
| DL Category 1bis | 10296 | 10296 | 250368 | 1 |
| DL Category 4 | 150752 | 75376 | 1827072 | 2 |
| DL Category 6 | 301504 | 149776 (4 layers, 64QAM) | 3654144 | 2 or 4 |
| | | 75376 (2 layers, 64QAM) | | |
| DL Category 7 | 301504 | 149776 (4 layers, 64QAM) | 3654144 | 2 or 4 |
| | | 75376 (2 layers, 64QAM) | | |
| DL Category 9 | 452256 | 149776 (4 layers, 64QAM) | 5481216 | 2 or 4 |
| | | 75376 (2 layers, 64QAM) | | |
| DL Category 10 | 452256 | 149776 (4 layers, 64QAM) | 5481216 | 2 or 4 |
| | | 75376 (2 layers, 64QAM) | | |
| DL Category 11 | 603008 | 149776 (4 layers, 64QAM) | 7308288 | 2 or 4 |
| | | 195816 (4 layers, 256QAM) | | |
| | | 75376 (2 layers, 64QAM) | | |
| | | 97896 (2 layers, 256QAM) | | |
| DL Category 12 | 603008 | 149776 (4 layers, 64QAM) | 7308288 | 2 or 4 |
| | | 195816 (4 layers, 256QAM) | | |
| | | 75376 (2 layers, 64QAM) | | |
| | | 97896 (2 layers, 256QAM) | | |
| DL Category 13 | 391632 | 195816 (4 layers, 256QAM) | 3654144 | 2 or 4 |
| | | 97896 (2 layers, 256QAM) | | |
| DL Category 14 | 3916560 | 391656 (8 layers, 256QAM) | 47431680 | 8 |
| DL Category 15 | 749856-807744 (Note 3) | 149776 (4 layers, 64QAM) | 9744384 | 2 or 4 |
| | | 195816 (4 layers, 256QAM), if *alternative TBS-Index-r14* is not supported) | | |
| | | 201936 (4 layers, 256QAM, if *alternative TBS-Index-r14* is supported) | | |
| | | 75376 (2 layers, 64QAM) | | |
| | | 97896 (2 layers, 256QAM), if *alternative TBS-Index-r14* is not supported) | | |
| | | 100752 (2 layers, 256QAM, if *alternative TBS-Index-r14* is supported) | | |
| DL Category 16 | 978960-1051360 (Note 3) | 149776 (4 layers, 64QAM) | 12789504 | 2 or 4 |
| | | 195816 (4 layers, 256QAM), if *alternative TBS-Index-r14* is not supported) | | |
| | | 201936 (4 layers, 256QAM, if *alternative TBS-Index-r14* is supported) | | |
| | | 75376 (2 layers, 64QAM) | | |
| | | 97896 (2 layers, 256QAM), if *alternative TBS-Index-r14* is not supported) | | |
| | | 100752 (2 layers, 256QAM, if *alternative TBS-Index-r14* is supported) | | |
| DL Category 17 | 25065984 | 391656 (8 layers, 256QAM) | 303562752 | 8 |
| DL Category 18 | 1174752-1211616 (Note 3) | [299856 (8 layers, 64QAM) 391656 (8 layers, 256QAM)] | 14616576 | 2 or 4 [or 8] |
| | | 149776 (4 layers, 64QAM) | | |
| | | 195816 (4 layers, 256QAM), if *alternative TBS-Index-r14* is not supported) | | |
| | | 201936 (4 layers, 256QAM, if *alternative TBS-Index-r14* is supported) | | |
| | | 75376 (2 layers, 64QAM) | | |
| | | 97896 (2 layers, 256QAM), if *alternative TBS-Index-r14* is not supported) | | |
| | | 100752 (2 layers, 256QAM, if *alternative TBS-Index-r14* is supported) | | |
| DL Category 19 | 1566336 -1658272 (Note 3) | [299856 (8 layers, 64QAM) | 19488768 | 2 or 4 [or 8] |
| | | 391656 (8 layers, 256QAM)] | | |
| | | 149776 (4 layers, 64QAM) | | |
| | | 195816 (4 layers, 256QAM), if *alternative TBS-Index-r14* is not supported) | | |
| | | 201936 (4 layers, 256QAM, if *alternative TBS-Index-r14* is supported) | | |
| | | 75376 (2 layers, 64QAM) | | |
| | | 97896 (2 layers, 256QAM), if *alternative TBS-Index-r14* is not supported) | | |
| | | 201936 (4 layers, 256QAM, if *alternative TBS-Index-r14* is supported) | | |
| NOTE 1: | In carrier aggregation operation, the DL-SCH processing capability can be shared by the UE with that of MCH received from a serving cell. If the total eNB scheduling for DL-SCH and an MCH in one serving cell at a given TTI is larger than the defined processing capability, the prioritization between DL-SCH and MCH is left up to UE implementation. | | | |
| NOTE 2: | Within one TTI, a UE indicating category 0 shall be able to receive up to 1000 bits for a transport block associated with C-RNTI/Semi-Persistent Scheduling C-RNTI/P-RNTI/SI-RNTI/RA-RNTI and up to 2216 bits for another transport block associated with P-RNTI/SI-RNTI/RA-RNTI. | | | |
| NOTE 3: | The UE indicating category x shall reach the value within the defined range indicated by "Maximum number of DL-SCH transport block bits received within a TTI" of category x. The UE shall determine the required value within the defined range indicated by "Maximum number of DL-SCH transport block bits received within a TTI" of the corresponding category, based on its capabilities (i.e. CA band combination, MIMO, Modulation scheme). If the UE capability of CA band combination, MIMO and modulation scheme supported can exceed the upper limit of the defined range, the UE shall support the maximum value of the defined range indicated by "Maximum number of DL-SCH transport block bits received within a TTI" of the corresponding category. | | | |

Die unterstützte Datenrate wird in der Tabelle in Form der maximalen Anzahl von Transport-Blöcken angegeben, die in einem Übertragungsrahmen übertragen werden können, siehe Spalte 2 der Tabelle. Daran ist es erkennbar, dass die gelieferte Datenrate mit der Mobilfunk-Gerätekategorienummer ansteigt. Die niedrigste Datenrate wird bei Mobilfunk-Gerätekategorie 1 geliefert, die höchste Datenrate bei Mobilfunk-Gerätekategorie 12.

Die nachfolgende zweite Tabelle zeigt die verschiedenen Mobilfunk-Gerätekategorien für den Uplink-Bereich. Auch diese Tabelle wurde der 3GPP Spezifikation 3GPP TS 36.606 V14.0.0 (2016-09) entnommen.

**Table 4.1A-2: Uplink physical layer parameter values set by the field ue-CategoryUL**

| UE UL Category | Maximum number of UL-SCH transport block bits transmitted within a TTI | Maximum number of bits of an UL-SCH transport block transmitted within a TTI | Support for 64QAM in UL | Support for 256QAM in UL |
|---|---|---|---|---|
| UL Category M1 (Note 1) | 1000 or 2984 | 1000 or 2984 | No | No |
| UL Category M2 | 6968 | 6968 | No | No |
| UL Category 0 | 1000 | 1000 | No | No |
| UL Category 1bis | 5160 | 5160 | No | No |
| UL Category 3 | 51024 | 51024 | No | No |
| UL Category 5 | 75376 | 75376 | Yes | No |
| UL Category 7 | 102048 | 51024 | No | No |
| UL Category 8 | 1497760 | 149776 | Yes | No |
| UL Category 13 | 150752 | 75376 | Yes | No |
| UL Category 14 | 9585664 | 149776 | Yes | No |
| UL Category 15 | 226128 | 75376 | Yes | No |
| UL Category 16 | 105528 | 105528 | Yes | Yes |
| UL Category 17 | 2119360 | 211936 | Yes | Yes |
| UL Category 18 | 211056 | 105528 | Yes | Yes |
| UL Category 19 | 13563904 | 211936 | Yes | Yes |
| UL Category 20 | 316584 | 105528 | Yes | Yes |
| UL Category 21 | 301504 | 75376 | Yes | No |
| NOTE 1: The UE supports "Maximum number of UL-SCH transport block bits transmitted within a TTI" and "Maximum number of bits of an UL-SCH transport block transmitted within a TTI" of 2984 bits if the UE indicates support of ce-pusch-nb-maxTbs-r14. Otherwise the UE supports 1000 bits. | | | | |

Auch hier gilt, dass die niedrigste Datenrate bei Mobilfunk-Gerätekategorie 1 geliefert wird und die höchste Datenrate bei Mobilfunk-Gerätekategorie 12, s. Spalte 2. Um möglichst wenig Energie zu verbrauchen, ist es vorteilhaft, wenn das Kommunikationsmodul 110 im abgestellten Fahrzeug 30 mit der niedrigsten Mobilfunk-Gerätekategorie betrieben wird. Das ist gem. beiden Tabellen die Mobilfunk-Gerätekategorie "Category M1". Diese Kategorie wurde speziell für Geräte der automatisierten Maschine zu Maschine - Kommunikation (MTC = Machine Type Communication) spezifiziert. Für ein parkendes Fahrzeug mit abgestelltem Motor wäre diese Kategorie geeignet, wenn es auf den niedrigsten Energieverbrauch ankommt.

Wird das Fahrzeug hingegen mit laufendem Motor betrieben und wird bewegt, dann kommt es vielmehr auf beste Versorgung des Fahrzeuges mit Daten an und es ist eine hohe Datenrate gewünscht. Im Beispiel von Fig. 1 trifft dies auf das Fahrzeug 32 zu. Fahrzeug 32 wird deshalb in einer Mobilfunk-Gerätekategorie ab Category 6 gem. Tabelle 1 betrieben.

Bei diesen Geräteklassen liegt der Fokus auf deren Funktion als mobiles Endgerät. Hier kommt es auf die Übertragung von Daten mit hoher Geschwindigkeit an (MBB = Mobile BroadBand), wobei der Energieverbrauch des Endgerätes nicht im Vordergrund steht.

Für das Fahrzeug 31 gilt die Besonderheit, dass es zwar ebenfalls abgestellt ist, jedoch als Funkrelais betrieben wird. Es dient also zur Weiterleitung der Daten die von und zu dem Fahrzeug 30 kommen/gehen. Solange es diese Funktion innehat, sollte es ebenfalls in der Gerätekategorie ab Category 6 gem. Tabelle 1 betrieben werden. Das Fahrzeug 31 wird nicht dauerhaft als Funkrelais betrieben um dessen Batterie zu schonen.

Im Folgenden wird ein Verfahren beschrieben, wie ein Wechsel der Mobilfunk-Gerätekategorie für die verschiedenen Betriebszustände der Fahrzeuge realisiert werden kann.

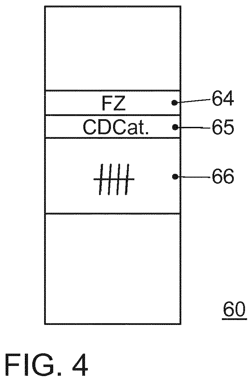

Dafür sind in dem Speicher 60 des Infotainment-Systems 200 bestimmte Bereiche reserviert, die den Wechsel der Mobilfunk-Gerätekategorie unterstützen. In Fig. 4 sind zwei Registerstellen 64, 65 in einem Registrierbereich des Speichers 60 hervorgehoben. Der Speicher 60 kann zu diesem Zweck als nichtflüchtiger Speicher, z.B. CMOS-RAM oder EEPROM oder FEPROM ausgebildet sein. Die Registerstelle 64 dient dazu den aktuellen Betriebszustand des Fahrzeuges widerzuspiegeln. Die Registerstelle 64 wird immer dann gesetzt, wenn der Betriebszustand wechselt. Also, wenn das Fahrzeug abgestellt wird, dann wird durch Ausschalten des Motors eine Programmroutine in der Recheneinheit 40 abgearbeitet, z.B. ausgelöst durch Interrupt, die die Registerstelle 64 neu setzt. War vorher an dieser Stelle der Betriebszustand "Motor An" eingetragen, so wird dann neu der Betriebszustand "Motor Aus" eingetragen. Weitere Betriebszustände können so an dieser Registerstelle 64 eingetragen werden. Als weiteres Beispiel wird der Betriebszustand "Relais" genannt, in dem z.B. das Fahrzeug 31 betrieben wird.

Die zweite Registerstelle 65 dient dem Zweck die aktuelle Mobilfunk-Gerätekategorie, mit der das Fahrzeug im Mobilfunknetz angemeldet ist, widerzuspiegeln. Sie wird jedesmal in einer Programmroutine neu gesetzt, die im Folgenden erläutert wird. Mit der Bezugszahl 66 ist noch eine Zuordnungstabelle bezeichnet, die vorgibt, welche Mobilfunk-Gerätekategorie für welchen Betriebszustand vorgesehen ist.

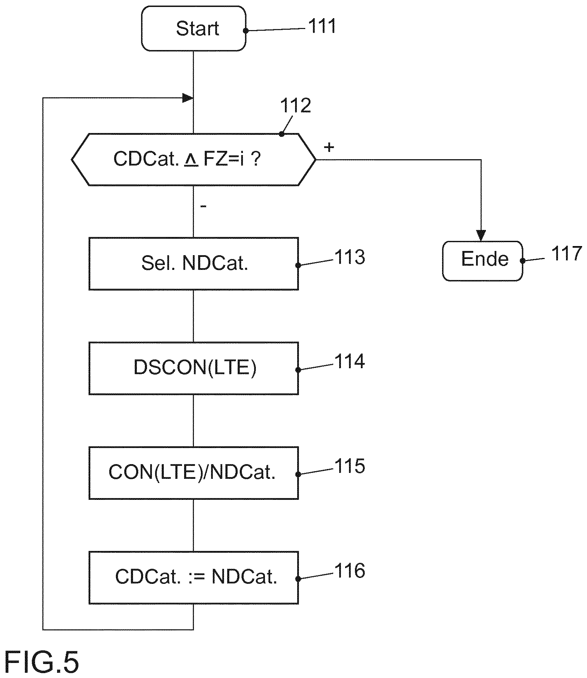

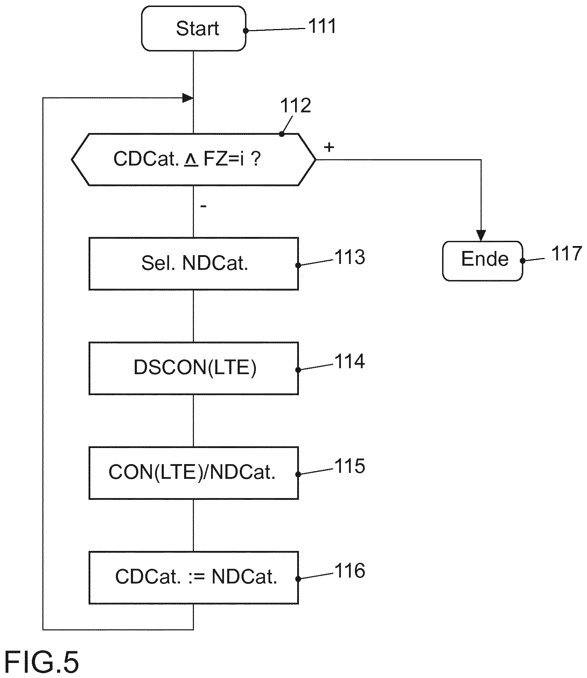

Die Programmroutine zum Setzen der Registerstelle 65 wird im laufenden Betrieb des Fahrzeuges häufig wiederholt. Sie wird zum Beispiel alle 1 bis 30 Sekunden aufgerufen. Auch diese Programmroutine wird in der Recheneinheit 40 abgearbeitet. Das Flussdiagramm dieser Programmroutine ist in Fig. 5 gezeigt. Mit der Bezugszahl 111 ist der Programmstart bezeichnet. In Abfrage 112 folgt die Prüfung ob die aktuell angemeldete Mobilfunk-Gerätekategorie CDCat. noch dem aktuellen Betriebszustand FZ des Fahrzeuges entspricht. Dazu wird der aktuelle Betriebszustand aus der Registerstelle 64 ausgelesen und die angemeldete Mobilfunk-Gerätekategorie wird aus der Registerstelle 65 ausgelesen. Um feststellen zu können ob sich beide Einträge entsprechen, wird in der Tabelle 66 nachgesehen, welche Mobilfunk-Gerätekategorie für den aktuellen Betriebszustand vorgesehen ist. Es wird angemerkt, dass es durchaus sinnvoll sein kann, dass für mehrere Betriebszustände ein und dieselbe Mobilfunk-Gerätekategorie vorgesehen ist. Genauso kann es sinnvoll sein, wenn für einen Betriebszustand mehrere Mobilfunk-Gerätekategorien in der Tabelle eingetragen sind.

Wird in Abfrage 112 festgestellt, dass für den aktuellen Betriebszustand das Fahrzeug mit einer laut Tabelle 66 zulässigen Mobilfunk-Gerätekategorie CDCat. angemeldet ist, endet das Programm im Schritt 117. Andernfalls erfolgt im Schritt 113 die Auswahl einer zulässigen Mobilfunk-Gerätekategorie mit Hilfe der Zuordnungstabelle 66. Die neue Auswahl wird in der Variablen NDCat. erfasst. Im nächsten Schritt 114 erfolgt die Abmeldung des Fahrzeuges sprich des Kommunikationsmoduls 110 des Fahrzeuges vom Mobilfunk. Bei LTE sind für die Anmeldung und Abmeldung im Netzwerk die sogenannten RRC Prozeduren vorgesehen, entsprechend Radio Ressource Control. Bei der Abmeldung wird die RRC Connection Release Prozedur durchgeführt. Es gibt eine RRC Spezifikation in der die Einzelheiten zu dieser Prozedur beschrieben sind. Diesbezüglich wird auf die ETSI Spezifikation ETSI TS 136 331 V13.1.0 (2016-04) hingewiesen. Die Connection Release Prozedur findet sich in Kapitel 5.3.8. Die Abmeldung erfolgt für die aktuelle Verbindung und damit für die Gerätekategorie CDCat., die bei der Einrichtung der Verbindung angemeldet wurde.

Sodann wird im Schritt 115 eine neue Anmeldeprozedur durchlaufen. Nach dem Standard ist es die RRC Connection Establishment Prozedur. Diese Prozedur ist in der ETSI Spezifikation TS 136 331 in Kapitel 5.3.3 beschrieben. Darin sendet die Mobilfunkstation, die sich anmeldet, nach einer Anfrage seitens der Basisstation 20 eine UE Capability Botschaft zurück, in der sie mitteilt, dass sie sich mit der neu ausgewählten Mobilfunk-Gerätekategorie NDCat. anmeldet. Die UE Capability Botschaft wird im logischen LTE Kanal UL-DCCH übertragen, entsprechend Dedicated Control Channel für die Uplink Übertragungsrichtung. Die Basisstation 20 richtet dann den entsprechenden Service passend zur angemeldeten Gerätekategorie NDCat. ein.

Im Schritt 116 wird die Registerstelle 64 im Speicher 60 aktualisiert. An dieser Registerstelle wird die neue Gerätekategorie NDCat. registriert.

Es sollte verstanden werden, dass das vorgeschlagene Verfahren und die zugehörigen Vorrichtungen in verschiedenen Formen von Hardware, Software, Firmware, Spezialprozessoren oder einer Kombination davon implementiert werden können. Spezialprozessoren können anwendungsspezifische integrierte Schaltungen (ASICs), Reduced Instruction Set Computer (RISC) und / oder Field Programmable Gate Arrays (FPGAs) umfassen. Vorzugsweise wird das vorgeschlagene Verfahren und die Vorrichtung als eine Kombination von Hardware und Software implementiert. Die Software wird vorzugsweise als ein Anwendungsprogramm auf einer Programmspeichervorrichtung installiert. Typischerweise handelt es sich um eine Maschine auf Basis einer Computerplattform die Hardware aufweist, wie beispielsweise eine oder mehrere Zentraleinheiten (CPU), einen Direktzugriffsspeicher (RAM) und eine oder mehrere Eingabe/Ausgabe (I/O) Schnittstelle(n). Auf der Computerplattform wird typischerweise außerdem ein Betriebssystem installiert. Die verschiedenen Prozesse und Funktionen, die hier beschrieben wurden, können Teil des Anwendungsprogramms sein, oder ein Teil der über das Betriebssystem ausgeführt wird.

Die Offenbarung ist nicht auf die hier beschriebenen Ausführungsbeispiele beschränkt. Es gibt Raum für verschiedene Anpassungen und Modifikationen, die der Fachmann aufgrund seines Fachwissens als auch zu der Offenbarung zugehörend in Betracht ziehen würde.

Statt des Ab- und Anmeldens einer Gerätekategorie mit jeder Zustandsänderung könnte eine neue Mobilfunk-Gerätekategorie für automobile Kommunikationsgeräte eingeführt werden. Ein Kommunikationsgerät mit dieser neuen Gerätekategorie könnte sich einmal am Mobilfunknetzwerk anmelden, um dann innerhalb der Verbindung die Kommunikationseigenschaften wie niedrige oder hohe Datenrate entsprechend der Fahrzeugzustände zu signalisieren. Dafür käme die im Standard vorgesehene Prozedur RRC Connection Reconfiguration, beschrieben in Kapitel 5.3.5 in Betracht. Allerdings wäre es erforderlich die neue Gerätekategorie zu spezifizieren.

Diese Alternative bietet die Möglichkeit noch die Besonderheiten eines automobilen Endgeräts (z.B. erweitertes Geschwindigkeitsprofil, Besonderheiten bei der Antennnenanordnung, erweitertes Ausgangsleistungsprofil) an das Netzwerk zu übermitteln.

Die Ausführungsbeispiele wurden für den Fahrzeugbereich beschrieben. Es wird aber darauf hingewiesen, dass die Erfindung auch in anderen Bereichen eingesetzt werden kann. So wäre es möglich die Erfindung auch bei anderen Mobilfunkgeräten, wie Smart Phones oder Tablets einzusetzen. Ein Betriebszustandwechsel ist auch bei diesen Geräten üblich. Insbesondere werden die Betriebszustände Power On und Standby erwähnt, für die ebenfalls verschiedene Gerätekategorien angemeldet werden könnten. Andere Zustände sind Audio oder Video Streaming, Software Update und Mobile Daten An / Aus.

Die Abarbeitung der Programmroutine kann auch von dem Kommunikationsmodul selber durchgeführt werden. Sie muss nicht in einer externen Recheneinheit erfolgen. Ebenfalls kann der zugehörige Speicher intern im Kommunikationsmodul vorgesehen sein.

### Bezugszeichenliste

- 10: Internet
- 20: Basisstation
- 30: geparktes Fahrzeug
- 31: geparktes Fahrzeug mit Relaisfunktion
- 32: Fahrzeug in Bewegung
- 40: Recheneinheit
- 50: Eingabeeinheit
- 52: berührungsempfindliche Anzeigeeinheit
- 54: Head-Up Display
- 60: Speichereinheit
- 64: Registerstelle Fahrzeugzustand
- 65: Registerstelle angemeldete Gerätekategorie
- 66: Zuordnungstabelle
- 70: Datenleitung zur Anzeigeeinheit
- 80: Datenleitung zur Speichereinheit
- 90: Datenleitung zur Eingabeeinheit
- 100: Datenbus
- 110: Kommunikationsmodul
- 111: Programmstart
- 112: Prüfung aktuelle Gerätekategorie und Fahrzeugzustand
- 113: Auswahl der passenden Gerätekategorie
- 114: Abmeldung vom Mobilfunk
- 115: Anmeldung zum Mobilfunk mit neuer Gerätekategorie
- 116: Festlegung aktuelle Gerätekategorie
- 120: Telefon
- 130: Navigationsgerät
- 140: Radio
- 150: Kamera
- 160: Kombiinstrument
- 200: Infotainment-System

## Patentansprüche

1. Verfahren zum Betreiben einer Mobilfunkstation (110) in einem Mobilfunksystem, welches durch die Mobilfunkstation (110) durchgeführt wird, wobei in dem Mobilfunksystem eine Anzahl von Mobilfunk-Gerätekategorien festgelegt sind, wobei die Kommunikation in dem Mobilfunksystem eine Einbuchung/Anmeldung durch die Mobilfunkstation (110) bei einer Mobilfunk-Basisstation (20) unter Angabe der Mobilfunk-Gerätekategorie voraussetzt, wobei einer Anzahl von verschiedenen Betriebszuständen der Mobilfunkstation (110) verschiedene Mobilfunk-Gerätekategorien zugewiesen werden und, dass in der Mobilfunkstation (110) überwacht wird ob der Betriebszustand wechselt und, dass im Betrieb überprüft wird ob die angemeldete Gerätekategorie noch zum Wechsel des Betriebszustandes passt, wobei, wenn festgestellt wird, dass für den Wechsel des Betriebszustandes eine andere Mobilfunk-Gerätekategorie vorgesehen ist, dass sich die Mobilfunkstation (110) von der Mobilfunk-Basisstation (20) abmeldet und, dass sich die Mobilfunkstation (110) unter Angabe der passenden Mobilfunk-Gerätekategorie bei der Mobilfunk-Basisstation (20) neu anmeldet, wobei die Mobilfunkstation (110) in einem Fahrzeug (30, 31, 32) eingebaut wird, **dadurch gekennzeichnet, dass** der Betriebszustand der Mobilfunkstation (110) sich auf den Betriebszustand des Fahrzeuges (30, 31, 32) bezieht, wobei wenigstens die Betriebszustände "Motor An" und "Motor Aus" für die Registrierung und bei der Prüfung, ob die angemeldete Gerätekategorie noch zum Wechsel des Betriebszustandes passt, unterschieden werden, wobei weiterhin wenigstens der Betriebszustand "Relais", in dem das abgestellte Fahrzeug als Funkrelais-Station (RN) betrieben wird, als weiterer Betriebszustand für die Registrierung und bei der Prüfung, ob die angemeldete Gerätekategorie noch zum Wechsel des Betriebszustandes passt, unterschieden wird.

2. Verfahren nach Anspruch 1, wobei der jeweilige Betriebszustand in einer Registerstelle (64) in einem Registerbereich eines Speichers (60) registriert wird und der Eintrag in der Registerstelle (64) bei Erkennen des Betriebszustandswechsels aktualisiert wird.

3. Verfahren nach Anspruch 1 oder 2, wobei die Prüfung ob die angemeldete Mobilfunk-Gerätekategorie noch zum Wechsel des Betriebszustandes passt, bei Erkennen des Betriebszustandswechsels durchgeführt wird.

4. Verfahren nach Anspruch 1 oder 2, wobei die Prüfung ob die angemeldete Gerätekategorie noch zum Wechsel des Betriebszustandes passt, im Betrieb laufend durchgeführt wird oder sporadisch wiederholt oder mit einem bestimmten Zeitintervall wiederholt wird.

5. Verfahren nach einem der Ansprüche 2 bis 4, wobei die aktuelle Mobilfunk-Gerätekategorie (CDCat.) in einer weiteren Registerstelle (65) des Registerbereichs registriert wird und der Eintrag in der weiteren Registerstelle (65) bei dem Vorgang der Abmeldung und Neuanmeldung der Mobilfunkstation (110) bei der Mobilfunk-Basisstation (20) aktualisiert wird.

6. Verfahren nach einem der vorhergehenden Ansprüche, wobei als Mobilfunksystem eine Variante der 3GPP Mobilfunk-Standardfamilie, insbesondere LTE, entsprechend Long Term Evolution, verwendet wird und für den Betriebszustand "Motor Aus" die Mobilfunk-Gerätekategorie "Category M1" entsprechend "machine type communication MTC" vorgesehen wird und für die Betriebszustände "Motor An" und "Relais" eine Mobilfunk-Gerätekategorie ab "Category 6" entsprechend "mobile broad band MBB" vorgesehen wird.

7. Verfahren nach einem der vorhergehenden Ansprüche, wobei die Zuordnung von einem oder mehreren Betriebszuständen zu einer Mobilfunk-Gerätekategorie einer Tabelle (66) in einem der Mobilfunkstation (110) zugeordneten Speicher (60) entnommen wird.

8. Mobilfunkstation mit Mitteln zur Durchführung des Verfahrens nach einem der vorhergehenden Ansprüche, wobei die Mobilfunkstation (110) in ein Fahrzeug (30, 31, 32) integrierbar ist, **dadurch gekennzeichnet, dass** die Mobilfunkstation einen Speicher aufweist, oder der Mobilfunkstation (110) ein Speicher (60) zugewiesen ist, in dem die Zuordnung von wenigstens den Betriebszuständen Motor An, Motor Aus sowie "Relais", in dem das abgestellte Fahrzeug als Funkrelais-Station (RN) betrieben wird, zu einer Mobilfunk-Gerätekategorie in einer Tabelle (66) abgespeichert ist.

9. Mobilfunkstation nach Anspruch 8, wobei der Speicher (60) eine Registerstelle (64) in einem Registrierbereich des Speichers (60) aufweist in dem der jeweilige Betriebszustand registriert ist, und wobei der Speicher (60) eine weitere Registerstelle (65) in dem Registrierbereich aufweist, in der die aktuelle Mobilfunk-Gerätekategorie (CDCat.) registriert ist.

10. Computerprogramm, **dadurch gekennzeichnet, dass** das Computerprogramm Programmschritte aufweist, die bei Abarbeitung des Programms durch eine Recheneinheit (40) diese veranlassen, das Verfahren nach einem der Ansprüche 1 bis 7 durchzuführen.

## Claims

1. A method for operating a mobile radio station (110) in a mobile radio system, which is carried out by the mobile radio station (110),
wherein a number of mobile radio device categories are defined in the mobile radio system, wherein the communication in the mobile radio system requires a logging in / logging on through the mobile radio station (110) at a mobile radio base station (20) by providing the mobile radio device category, wherein different mobile radio device categories are assigned to a number of different operating states of the mobile radio station (110), that it is monitored in the mobile radio station (110) whether the operating state changes, and that it is analysed during operation whether the logged on device category is still suitable for changing the operating state, wherein, when determining that a different mobile radio device category is provided for changing the operating state, that the mobile radio station (110) logs out of the mobile radio base station (20), and that the mobile radio station (110) logs on again at the mobile radio base station (20) by providing the suitable mobile radio device category, wherein the mobile radio station (110) is installed in a vehicle (30, 31, 32), **characterised in that** the operating state of the mobile radio station (110) refers to the operating state of the vehicle (30, 31, 32), wherein at least the operating states "Engine on" and "Engine off" are differentiated for registration and when analysing whether the logged on device category is still suitable for changing the operating state, wherein furthermore at least the operating state "Relay", in which the shut-off vehicle is operated as radio relay station (RN), is differentiated as further operating state for registration and when analysing whether the logged on device category is still suitable for changing the operating state.

2. The method according to claim 1, wherein the respective operating state is registered in a registration point (64) in a registration area of a memory (60) and the entry in the registration point (64) is updated once the change in operating state is detected.

3. The method according to claim 1 or 2, wherein the analysis whether the logged on mobile radio device category is still suitable for changing the mobile radio device category is carried out once the change in operating state is detected.

4. The method according to claim 1 or 2, wherein the analysis whether the logged on device category is still suitable for changing the operating state, is carried out continuously during operation or repeated sporadically or repeated with a certain time interval.

5. The method according to one of the claims 2 to 4, wherein the current mobile radio device category (CDCat.) is registered in a further registration point (65) of the registration area, and the entry in the further registration point (65) is updated during the process of logging the mobile radio station (110) off and logging on again at the mobile radio base station (20) .

6. The method according to one of the preceding claims, wherein used as mobile radio system is a version of the 3GPP mobile radio family of standards, particularly LTE, corresponding to Long Term Evolution, and the mobile radio device category "Category M1" corresponding to "machine type communication MTC" is provided for the operating state "Engine off", and a mobile radio device category starting at "Category 6" corresponding to "mobile broad band MBB" is provided for the operating states "Engine on" and "Relay".

7. The method according to one of the preceding claims, wherein the assignment of one or several operating states to a mobile radio device category is gathered from a table (66) in a memory (60) assigned to the mobile radio station (110).

8. A mobile radio station with means for carrying out the method according to one of the preceding claims, wherein the mobile radio station (110) can be integrated in a vehicle (30, 31, 32), **characterised in that** the mobile radio station has a memory, or a memory (60) is assigned to the mobile radio station (110), in which the assignment of at least the operating states Engine on, Engine off, as well as "Relay", in which the shut-off vehicle is operated a radio relay station (RN), to a mobile radio device category is stored in a table (66).

9. The mobile radio station according to claim 8, wherein the memory (60) has a registration point (64) in a registration area of the memory (60) in which the respective operating state is registered, and wherein the memory (60) has a further registration point (65) in the registration area, in which the current mobile radio device category (CDCat.) is registered.

10. A computer program, **characterised in that** the computer program has program steps, which when processing the program by means of a processing unit (4) prompt it to carry out the method according to one of the claims 1 to 7.

## Revendications

1. Procédé de fonctionnement d'une station radio mobile (110) dans un système de radio mobile, qui est réalisé à travers la station radio mobile (110), dans lequel, dans le système de radio mobile, un nombre de catégories d'appareils de radio mobile est établi, dans lequel la communication dans le système de radio mobile requiert un/e enregistrement/connexion à travers la station radio mobile (110) à une station de base de radio mobile (20) avec l'indication de la catégorie d'appareil de radio mobile, dans lequel plusieurs catégories d'appareils de radio mobile sont attribuées à un nombre de plusieurs états de fonctionnement de la station radio mobile (110), que on surveille dans la station radio mobile (110) si l'état de fonctionnement change, et que on vérifie pendant le fonctionnement si la catégorie d'appareil connectée s'ajuste encore au changement d'état de fonctionnement, dans lequel, s'il est déterminé que, pour le changement de l'état de fonctionnement, une autre catégorie d'appareil de radio mobile est prévue, que la station radio mobile (110) se déconnecte de la station de base de la radio mobile (20), et que la station radio mobile (110) se reconnecte à la station de base de la radio mobile (20) avec l'indication de la catégorie d'appareil de radio mobile appropriée, dans lequel la station radio mobile (110) est installée dans un véhicule (30, 31, 32), **caractérisé en ce que** l'état de fonctionnement de la station radio mobile (110) se réfère à l'état de fonctionnement du véhicule (30, 31, 32), au moins les états de fonctionnement « Moteur allumé » et « Moteur éteint » étant différenciés pour l'enregistrement et lors de la vérification pour savoir si la catégorie d'appareil connectée s'ajuste encore au changement de l'état de fonctionnement, et au moins l'état de fonctionnement « Relais », dans lequel le véhicule arrêté fonctionne comme une station de relais radio (RN), étant différencié comme un autre état de fonctionnement pour l'enregistrement et lors de la vérification pour savoir si la catégorie d'appareil connectée s'ajuste encore au changement de l'état de fonctionnement.

2. Procédé selon la revendication 1, dans lequel l'état de fonctionnement respectif est enregistré dans une position de registre (64) dans une zone de registre d'une mémoire (60) et l'entrée dans la position de registre (64) est actualisée lors de la détection du changement d'état de fonctionnement.

3. Procédé selon la revendication 1 ou 2, dans lequel la vérification pour savoir si la catégorie d'appareil de radio mobile connectée s'ajuste encore au changement de l'état de fonctionnement, est effectuée lors de la détection du changement d'état de fonctionnement.

4. Procédé selon la revendication 1 ou 2, dans lequel la vérification pour savoir si la catégorie d'appareil connectée s'ajuste encore au changement de l'état de fonctionnement, est effectuée continuellement pendant le fonctionnement ou est répétée sporadiquement ou est répétée à un intervalle de temps déterminé.

5. Procédé selon l'une des revendications 2 à 4, dans lequel la catégorie d'appareil de radio mobile actuelle (CDCat.) est enregistrée dans une autre position de registre (65) de la zone de registre et l'entrée dans l'autre position de registre (65) est actualisée lors de l'opération de déconnexion et de nouvelle connexion de la station radio mobile (110) à la station de base de la radio mobile (20).

6. Procédé selon l'une des revendications précédentes, dans lequel une variante de la famille standard de radio mobile 3GPP, en particulier LTE, correspondant à Long Term Evolution, est utilisée comme système de radio mobile et la catégorie d'appareil de radio mobile « Category M1 » correspondant à « machine type communication MTC » est prévue pour l'état de fonctionnement « Moteur éteint » et une catégorie d'appareil de radio mobile à partir de « Category 6 » correspondant à « mobile broad band MBB » est prévue pour les états de fonctionnement « Moteur allumé » et « Relais ».

7. Procédé selon l'une des revendications précédentes, dans lequel l'attribution d'un ou de plusieurs états de fonctionnement à une catégorie d'appareil de radio mobile d'un tableau (66) est extraite d'une mémoire (60) attribuée à la station radio mobile (110).

8. Station radio mobile avec des moyens pour la réalisation du procédé selon l'une des revendications précédentes, la station radio mobile (110) pouvant être intégrée dans un véhicule (30, 31, 32), **caractérisée en ce que** la station radio mobile comporte une mémoire ou une mémoire (60) est attribuée à la station radio mobile (110), dans ladite mémoire l'attribution d'au moins les états de fonctionnement Moteur allumé, Moteur éteint et « Relais », dans lequel le véhicule arrêté fonctionne comme une station de relais radio (RN), est enregistrée dans une catégorie d'appareil de radio mobile dans un tableau (66) .

9. Station radio mobile selon la revendication 8, dans laquelle la mémoire (60) comporte une position de registre (64) dans une zone d'enregistrement de la mémoire (60), dans laquelle l'état de fonctionnement respectif est enregistré et dans laquelle la mémoire (60) comporte une autre position de registre (65) dans la zone d'enregistrement, dans ladite position de registre, la catégorie d'appareil de radio mobile actuelle (CDCat.) est enregistrée.

10. Programme informatique, **caractérisé en ce que** le programme informatique comporte des étapes de programme, qui, lors de de l'exécution du programme par une unité de calcul (40), ordonne à celle-ci de réaliser le procédé selon l'une des revendications 1 à 7.
